# EUROPÄISCHE PATENTSCHRIFT

(11) **EP 3 301 408 B1**
(45) Veröffentlichungstag und Bekanntmachung des Hinweises auf die Patenterteilung: **07.07.2021**
(21) Anmeldenummer: 17189913.1
(22) Anmeldetag: 07.09.2017
(51) Int. Cl.: G01F 1/20, A01D 41/127, G01F 1/30, G01F 3/24

(54) **ANORDNUNG EINER MESSEINRICHTUNG ZUR MESSUNG EINES AUS SCHÜTTGUT BESTEHENDEN MASSENSTROMS**
ASSEMBLY OF A MEASURING DEVICE FOR MEASURING A MASS FLOW OF BULK MATERIAL
SYSTÈME DE DISPOSITIF DE MESURE D'UN DÉBIT MASSIQUE DE PRODUIT EN VRAC

(30) Priorität: 29.09.2016 DE 102016118560
(43) Veröffentlichungstag der Anmeldung: 04.04.2018
(73) Patentinhaber: CLAAS Selbstfahrende Erntemaschinen GmbH, 33428 Harsewinkel (DE)
(72) Erfinder: BRANDMEIER, Jonas, 33428 Harsewinkel (DE); QUINCKE, Gunnar, 59494 Soest (DE); KOITSCH, Roger Helmut, 33640 Bielefeld (DE)
(74) Vertreter: CLAAS Gruppe

(56) Entgegenhaltungen:
- EP-A1- 0 853 234
- DE-A1- 19 541 167
- US-A- 5 343 761
- US-A- 5 686 671

## Beschreibung

Die vorliegende Erfindung betrifft eine Anordnung einer Messeinrichtung gemäß dem Oberbegriff des Anspruches 1 sowie einen Mähdrescher gemäß dem Oberbegriff des Anspruches 10.

Eine Anordnung einer Messeinrichtung sowie ein Mähdrescher der eingangs genannten Art sind aus der EP 1 169 905 A1 bekannt. Darin ist eine Anordnung einer Messeinrichtung zur Messung eines aus Schüttgut bestehenden Massenstroms, insbesondere Körnerfrüchten, beschrieben. Das Schüttgut wird mittels einer endlos umlaufenden, flächige Förderelemente aufweisenden, abschnittsweise von einem Gehäuse umgebenen Fördervorrichtung von einem tiefer gelegenen Schüttgutannahmebereich zu einem höher gelegenen Schüttgutabgabebereich gefördert. Dabei wird dem von dem jeweiligen Förderelement in radialer Richtung einer Innenfläche eines Deckelabschnitts des Gehäuses abgegebenen Schüttgut durch eine im Kopfbereich der Fördervorrichtung ausgebildete Führungsfläche ein im Wesentlichen kreisbahnförmiger Bewegungsverlauf aufgeprägt. Dadurch wird das Schüttgut in Richtung auf eine Sensorfläche der Messeinrichtung umgelenkt. Die Messeinrichtung misst die von dem Erntegutstrom aufgebrachte Zentrifugalkraft. Aufgrund der Messwerte für die Zentrifugalkraft lässt sich der Durchsatz des von der Fördervorrichtung geförderten Erntegutes bestimmen. Die Sensorfläche weist einlaufseitig eine nach außen abgeknickte Vorderkante auf, so dass sich eine Unstetigkeit im Übergang zwischen der Führungsfläche und der Sensorfläche einstellt. Hierdurch wird der Strömungsverlauf des Erntegutes vor beziehungsweise beim Auftreffen auf die Sensorfläche beeinträchtigt, was die Messgenauigkeit beeinflusst.

Aus der US 5,343,761 A ist zudem eine Ausführung bekannt geworden, bei der ein zu detektierender Gutstrom unmittelbar und nahezu senkrecht auf die mit der Sensiereinrichtung verbundene Sensorfläche auftrifft. Eine derartige Lösung hat insbesondere den Nachteil, dass auch die Reibkräfte aufgrund des senkrechten Auftreffen auf die Sensorfläche sensiert werden, sodass sich eine Verfälschung des Messergebnisses einstellt.

Aufgabe der vorliegenden Erfindung ist es daher, eine Anordnung einer Messeinrichtung sowie einen Mähdrescher der eingangs genannten Art derart weiterzuentwickeln, dass diese sich durch eine höhere Genauigkeit bei der Bestimmung des Durchsatzes auszeichnen.

Diese Aufgabe wird erfindungsgemäß durch eine Anordnung gemäß dem Anspruch 1 sowie durch einen Mähdrescher gemäß dem Anspruch 10 gelöst.

Vorteilhafte Weiterbildungen sind Gegenstand der von diesen abhängigen Unteransprüchen.

Gemäß dem Anspruch 1 wird vorgeschlagen, dass die Anordnung einer Messeinrichtung zur Messung eines aus Schüttgut bestehenden Massenstroms, insbesondere Körnerfrüchten, in einer endlos umlaufenden, flächige Förderelemente aufweisenden, abschnittsweise von einem Gehäuse umgebenen Fördervorrichtung, welche das Schüttgut von einem tiefer gelegenen Schüttgutannahmebereich zu einem höher gelegenen Schüttgutabgabebereich fördert, wobei dem von dem jeweiligen Förderelement in im Wesentlichen radialer Richtung einer Innenfläche eines Deckelabschnitts des Gehäuses abgegebenen Schüttgut durch eine im Kopfbereich der Fördervorrichtung ausgebildete Führungsfläche ein im Wesentlichen kreisbahnförmiger Bewegungsverlauf aufprägbar und das Schüttgut dadurch in Richtung auf eine Sensorfläche der Messeinrichtung umlenkbar ist, wobei zumindest die Sensorfläche der Messeinrichtung derart im Kopfbereich der Fördervorrichtung angeordnet ist, dass sich im Übergang von der Führungsfläche auf die Sensorfläche ein tangentialer Verlauf einstellt, so dass die Sensorfläche den Bewegungsverlauf des Massenstroms tangiert. Die Anordnung zumindest der Sensorfläche ist derart gewählt, dass diese den kreisbahnförmigen Bewegungsverlauf des Erntegutes tangiert, wodurch die von dem Massenstrom auf die Sensorfläche ausgeübten Reibungskräfte kompensierbar sind. Die resultierende Reibungskraft wirkt dabei tangential auf die Sensorfläche ein, so dass die resultierende Reibungskraft durch die Messvorrichtung, welche nur senkrecht zur Sensorfläche auftretende Kräfte erfasst, nicht oder nahezu nicht erfasst wird. Durch diese Anordnung lässt sich die Genauigkeit der Kraftmessung erhöhen, da sich auch im Übergang von der Führungsfläche auf die Sensorfläche ein kontinuierlicher, gleichmäßiger Erntegutstrom einstellt.

Hierbei ist die Führungsfläche Teil eines separaten Führungsabschnittes, welcher sich im Schüttgutabgabebereich an den Deckelabschnitt anschließt. Ein solcher Führungsabschnitt ermöglicht eine einfache Austauschbarkeit und ermöglicht eine Zugänglichkeit zu der dahinter angeordneten Sensorfläche.

Gemäß einer alternativen Ausgestaltung kann die Führungsfläche auch Teil des Deckelabschnittes sein. Gemäß dieser Ausführung befindet sich die Führungsfläche im kopfseitigen Einlaufbereich der Fördervorrichtung, das heißt vor dem Umlenkpunkt der Förderelemente.

Insbesondere kann die Messeinrichtung an einer der Führungsfläche abgewandten Seite angeordneten Halterung angebracht sein. Hierbei kann die Halterung an dem separaten Führungsabschnitt angeordnet sein. Im Fall der Ausgestaltung der Führungsfläche als ein Teil des Deckelabschnitts ist die Halterung entsprechend auf der Außenseite des Deckelabschnitts angeordnet.

Weiterhin ist vorgesehen, dass ein Abstand zwischen dem freien Ende des jeweiligen Förderelements und einem die Fördervorrichtung im Schüttgutabgabebereich umgebenden Deckelabschnitt in einer Position des Förderelementes, in welcher die Beabstandung zu dem Deckelabschnitt am geringsten ist, derart gewählt ist, dass das auf dem Förderelement befindliche Schüttgut nahezu vollständig abgebbar und eine gleichmäßige Anströmung der Sensorfläche erreichbar ist.

Bevorzugt sollte ein Mindestabstand zwischen dem freien Ende des jeweiligen Förderelements und einem die Fördervorrichtung im Schüttgutabgabebereich umgebenden Deckelabschnitt in einer Position des Förderelementes, in welcher die Beabstandung zu dem Deckelabschnitt am geringsten ist, gleich oder kleiner sein als ein Abstand zwischen dem freien Ende des Förderelementes und seinem Anlenkpunkt an einem endlos umlaufenden Antriebsmittel der Fördervorrichtung. Die Berücksichtigung des Mindestabstandes zwischen dem freien Ende des jeweiligen Förderelements und dem die Fördervorrichtung im Schüttgutabgabebereich umgebenden Deckelabschnitt ist wesentlich, um dem von den Förderelementen auf einer Wurfparabel abgegebenen Schüttgut ausreichend Raum zu lassen, sich an die Deckelkontur anzupassen, so dass sich ein gleichförmiger, kontinuierlicher Massenstrom ausbildet. Als weiterer Vorteil ergibt sich bei einer Anordnung der Führungsfläche und der Sensorfläche im beziehungsweise hinter dem Schüttgutabgabebereich der Fördervorrichtung, dass die Förderelemente eine geringere Restbeladung aufweisen, wenn das jeweilige Förderelement den Bereich, in dem sich der Mindestabstand einstellt, passiert hat.

Ein weiterer Aspekt ist, dass der Mindestabstand zwischen dem freien Ende des Förderelementes und dem Deckelabschnitt im Schüttgutabgabebereich konstant sein sollte. Hierdurch ist gewährleistet, dass sich stets eine gleichmäßige Anströmung der Sensorfläche mit Schüttgut einstellt, was für die Genauigkeit und Reproduzierbarkeit der Messung von Bedeutung ist.

Insbesondere kann die Messeinrichtung eine Kraftmesszelle umfassen, mittels der die Sensorfläche an der Fördervorrichtung angeordnet ist. Durch die Anbindung der Sensorfläche nur durch die Kraftmesszelle treten keine Störeinflüsse durch Hysterese einer eventuellen Lagerung auf.

Dabei kann die Sensorfläche derart zum Massenstrom des Schüttgutes ausgerichtet sein, dass eine aus den an der Oberfläche der Sensorfläche auftretenden Reibkräften resultierende Reibungskraft parallel zur Längsachse der Kraftmesszelle wirkt. Wegen der Orientierung der resultierenden Reibungskraft parallel zur Längsachse der Kraftmesszelle werden die Reibungskräfte von dieser messtechnisch nicht oder nahezu nicht erfasst. Der Abstand von resultierender Reibkraft und Achse der Kraftmesszelle sollte hierzu möglichst gering sein.

Dabei kann die Kraftmesszelle als eine Plattformwägezelle ausgebildet sein. Die als Plattformwägezelle ausgebildete Kraftmesszelle misst die von dem Schüttgutstrom auf die Sensorfläche aufgebrachten Kräfte unabhängig vom Hebelarm, mit dem diese an dem Führungsabschnitt angeordnet ist.

Vorzugsweise kann der der Deckelabschnitt mehrteilig ausgebildet sein.

Weiterhin wird die eingangs gestellte Aufgabe durch einen Mähdrescher gelöst, mit einer endlos umlaufenden, flächige Förderelemente aufweisenden, abschnittsweise von einem Gehäuse umgebenen Fördervorrichtung, welche Schüttgut von einem tiefer gelegenen Schüttgutannahmebereich zu einem höher gelegenen Schüttgutabgabebereich fördert, wobei in dem von dem jeweiligen Förderelement in im Wesentlichen vertikaler Richtung abgegebenen Schüttgut durch eine im Schüttgutabgabebereich angeordnete Führungsfläche ein im Wesentlichen kreisbahnförmiger Bewegungsverlauf aufprägbar ist und das Schüttgut dadurch in Richtung auf eine Sensorfläche einer Messeinrichtung zur Messung eines aus Schüttgut bestehenden Massenstroms, insbesondere Körnerfrüchte, umlenkbar ist, gekennzeichnet durch eine Anordnung der Messeinrichtung gemäß einem der Patentansprüche 1 bis 9.

Hierbei ist es vorteilhaft, wenn die als Kettenförderer ausgebildete Fördervorrichtung eine Spannvorrichtung aufweist, welche im Schüttgutannahmebereich des Mähdreschers angeordnet ist. Durch die Anordnung der Spannvorrichtung im Schüttgutannahmebereich respektive im Fußbereich der Fördervorrichtung lässt sich die erforderliche Zugspannung der Förderkette nachjustieren, ohne dabei die Einhaltung des Mindestabstandes des jeweiligen Förderelementes zum Deckelabschnitt im Kopfbereich der Fördervorrichtung zu beeinflussen.

Die vorliegende Erfindung wird nachstehend anhand von in den Zeichnungen dargestellten Ausführungsbeispielen näher erläutert.

Es zeigen:
- Fig. 1: eine schematische Seitenansicht eines Mähdreschers;
- Fig. 2: eine Teilansicht einer als Kettenförderer ausgeführten Fördervorrichtung für den Mähdrescher;
- Fig. 3: eine vereinfachte Teilansicht der Fördervorrichtung gemäß Fig. 2;
- Fig. 4: eine Teilansicht einer alternativen Anordnung einer Messeinrichtung im Kopfbereich der Fördervorrichtung.

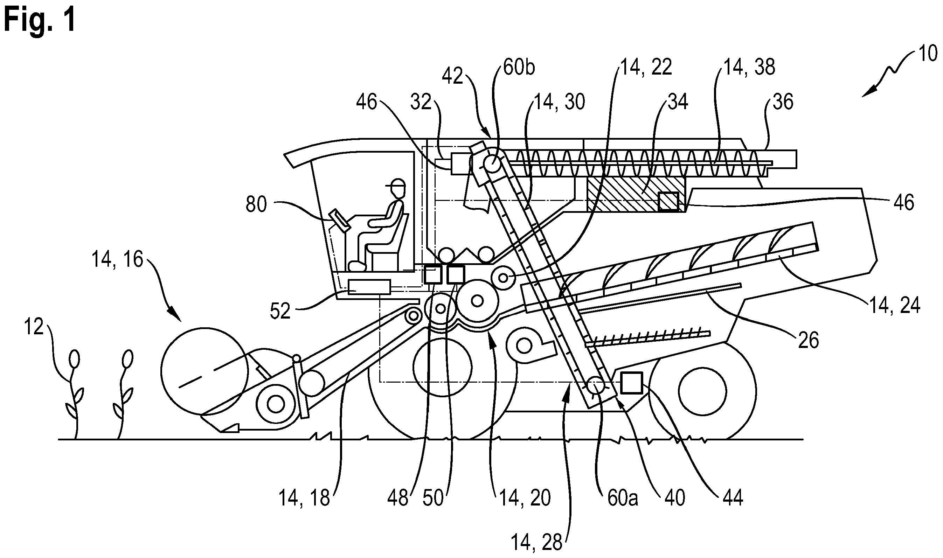

In Fig. 1 ist eine landwirtschaftliche Erntemaschine im Sinne der vorliegenden Erfindung dargestellt, bei der es sich um einen selbstfahrenden Mähdrescher 10 handelt. Der Mähdrescher 10 weist zur Aufnahme und Bearbeitung von Erntegut 12 eine Vielzahl von Arbeitsaggregaten 14 auf. Zu den Arbeitsaggregaten 14 zählen bei dem hier dargestellten Mähdrescher 10 ein Schneidwerk 16 zur Aufnahme des Erntegutes 12 und ein mit diesem verbundener Schrägförderer 18 zum Weitertransport des Erntegutes 12 in den Mähdrescher. Von dem Schrägförderer 18 wird das Erntegut 12 als Erntegutstrom an eine als weiteres Arbeitsaggregat 14 ausgebildete Drescheinrichtung 20 des Mähdreschers 10 übergeben. Durch eine Umlenktrommel 22 gelangt der Erntegutstrom in eine als Trennrotor ausgebildete Trenneinrichtung 24 zum Abscheiden von freibeweglichen Körnern des Erntegutstromes in einen unteren Bereich des Mähdreschers. Von hier aus gelangt der Erntegutstrom über einen Rücklaufboden 26 zu einer Reinigungsvorrichtung 28, welche Siebböden und ein Gebläse zur Reinigung des Erntegutes umfasst. Die freibeweglichen Körner aus dem Erntegutstrom werden von einer als Kettenförderer ausgebildeten Fördervorrichtung 30 zu einem Korntank 32 transportiert. Hierzu nimmt die Fördervorrichtung 30 das gereinigte Erntegut in einem tiefer gelegenen Schüttgutannahmebereich 40 im Fußbereich der Fördervorrichtung 30 an und fördert es zu einem höher gelegenen Schüttgutabgabebereich 42 im Kopfbereich der Fördervorrichtung 30. Der Mähdrescher 10 weist zudem einen Antriebsmotor 34 auf, der die zum Betrieb der Arbeitsaggregate 14 und zur Fortbewegung des Mähdreschers 10, beispielsweise mittels eines hydrostatischen Fahrantriebes (nicht dargestellt), benötigte Antriebsleistung bereitstellt. Die Arbeitsaggregate 14 und der Fahrantrieb des Mähdreschers 10 sind hierfür zur Energieübertragung mit der Antriebsmaschine 34 verbunden.

Weiterhin umfasst der Mähdrescher 10 eine Steuer- und Regelvorrichtung 52, welche mit einer Ein- und Ausgabeeinrichtung 80 im Inneren einer Kabine des Mähdreschers 10 signaltechnisch verbunden ist. Darüber hinaus ist die Steuer- und Regelvorrichtung 52 mit mehreren an dem Mähdrescher 10 verbauten Sensoren verbunden, die der Bestimmung von Betriebs- und Erntegutparametern dienen. Bei den an bzw. in dem Mähdrescher 10 verbauten Sensoren handelt es sich unter anderem um einen Feuchtesensor 44 zur Bestimmung des Feuchtegehalts des, insbesondere gereinigten, Erntegutes, zumindest einen Drehzahlsensor 46 zur Überwachung der Antriebsdrehzahl der Antriebsmaschine 34, einen Neigungssensor 50 sowie zumindest einen Beschleunigungssensor 48, welcher auf den Mähdrescher 10 einwirkende Beschleunigungen bestimmt, die durch die Fahrt auf dem Feld verursacht bzw. durch die Antriebsmaschine 34 und sonstige die Antriebskräfte übertragenden Komponenten des Mähdrescher 10 entstehen. Die Anordnung weiterer Sensoren, die Betriebs- oder Erntegutparameter erfassen, welche insbesondere eine Durchsatzmessung des gereinigten Erntegutes in der Fördervorrichtung 30 beeinflussen können, ist denkbar.

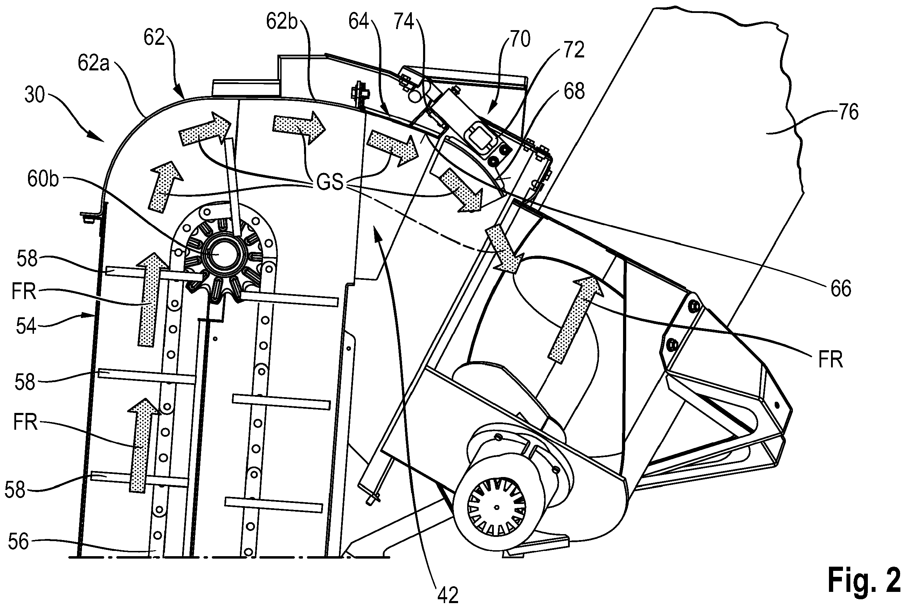

In Fig. 2 ist eine Teilansicht der als Kettenförderer ausgeführten Fördervorrichtung 30 für den Mähdrescher 10 dargestellt. Die Fördervorrichtung 30 umfasst ein Gehäuse 54, welches eine endlos umlaufende Förderkette 56, die um jeweils ein im Schüttgutannahmebereich 40 und im Schüttgutabgabebereich 42 angeordnetes unteres und oberes Ketten- bzw. Antriebsrad 60a, 60b angetrieben und umgelenkt wird, weitgehend umschließt. Im Schüttgutannahmebereich 40 sowie im Schüttgutabgabebereich 42 weist das Gehäuse 54 Öffnungen auf, durch welche das Erntegut zugeführt und abgeführt wird. An der endlos umlaufenden Förderkette 56 sind gleichmäßig zueinander beabstandet flächige Förderelemente 58 angeordnet. Die paddelförmigen Förderelemente 58 erstrecken sich im Wesentlichen senkrecht zur Förderkette 56. Die Förder- respektive Umlaufrichtung der Fördervorrichtung 30 ist durch Pfeile FR gekennzeichnet. So kann zumindest ein Sensor 46 der Fördervorrichtung 30 zugeordnet sein, welcher die Fördergeschwindigkeit der Fördervorrichtung 30 überwacht. Dieser Sensor kann als ein Drehzahlsensor 46 ausgeführt sein, der die Drehzahl eines der Kettenräder 60a, 60b überwacht. Alternativ kann ein optischer Sensor vorgesehen sein, der die zeitlichen Abstände der vorbeilaufenden Förderelemente 58 erfasst.

Im Schüttgutabgabebereich 42 ist das obere Kettenrad 60b von einem ein- oder mehrteilig ausgebildeten Deckelabschnitt 62 abschnittsweise umgeben. Der Deckelabschnitt 62 weist einen ersten Abschnitt 62a mit einem im Wesentlichen kreissektorförmigen Querschnitt auf, welcher das obere Kettenrad 60b in radialer Richtung abschnittsweise umgibt. Auf der dem Schüttgutabgabebereich 42 zugewandten Seite weist der Deckelabschnitt 62 einen zweiten Abschnitt 62b mit einem im Wesentlichen quaderförmigen Querschnitt auf. Der zweite Abschnitt 62b weist dabei einen geringeren Krümmungsradius als der erste Abschnitt 62a des Deckelabschnitts 62 auf.

An den Deckelabschnitt 62 schließt sich ein Führungsabschnitt 64 an. Der Führungsabschnitt 64 ist als separates Bauteil ausgeführt. Ein dem oberen Kettenrad 60b zugewandter Übergang 78 zwischen dem Deckelabschnitt 62 und dem Führungsabschnitt 64 weist in Umfangsrichtung einen tangentialen Verlauf auf. Die Anordnung des Führungsabschnittes 64 am Deckelabschnitt 62 erfolgt dabei im Wesentlichen absatzfrei, so dass sich ein tangentialer Übergang einstellt. Die sich vor dem Erreichen des oberen Kettenrades 60b im Wesentlichen in der Horizontalen befindenden Förderelemente 58 transportieren das Erntegut zunächst vom tiefer gelegenen Schüttgutannahmeabschnitt 40 zum höher gelegenen Schüttgutabgabeabschnitt 42. Durch das Umlenken der Förderelemente 58 um das obere Kettenrad 60b wird das auf dem flächigen Förderelement 58 liegende Erntegut in radialer Richtung des Deckelabschnitts 64 abgegeben. Seine dem Kettenrad 60b zugewandte Innenfläche des Deckelabschnittes 62 begrenzt dabei die Flugbahn des von den Förderelementen 58 in einer Wurfbewegung abgegebenen Erntegutes in radialer Richtung. Pfeile GS veranschaulichen den Strömungsverlauf des sich entlang des Deckelabschnitts 62, des Führungsabschnitts 64 sowie einer Sensorfläche 68 bewegenden Schüttgut- bzw. Erntegutstromes.

An dem Führungsabschnitt 64 ist eine Messeinrichtung 70 angeordnet. Hierzu ist an der Außenseite des Führungsabschnittes 64 eine Halterung 74 vorgesehen. An der Halterung 74 ist eine Kraftmesszelle 72 angebracht. An der Kraftmesszelle 72 ist die Sensorfläche 68 angeordnet, die einen entsprechend dem Strömungsverlauf GS gekrümmten Verlauf aufweist. Die Kraftmesszelle 72 und die Sensorfläche 68 sind Bestandteil der Messeinrichtung 70. Der Führungsabschnitt 64 weist eine Führungsfläche 66 auf, die dem oberen Kettenrad 60b zugewandt ist. Ein weiterer Übergang 78 zwischen der Führungsfläche 66 des Führungsabschnittes 64 und der Sensorfläche 68 der Messeinrichtung 70 weist ebenfalls einen tangentialen Verlauf auf. Die Sensorfläche 68 der Messeinrichtung 70 ist derart im Kopfbereich der Fördervorrichtung 30 angeordnet, dass sich im Übergang 78 von der Führungsfläche 66 auf die Sensorfläche 68 ein tangentialer Verlauf einstellt. Die Positionierung der Messeinrichtung 70 erfolgt dabei im Auslaufbereich der Fördervorrichtung 30, das heißt nachdem das Erntegut die paddelförmigen Förderelemente 58 vollständig verlassen hat. Die Sensorfläche 68 weist eine abrasionsbeständige, verschleißfeste Oberfläche auf, welche sich durch eine Oberflächenrauigkeit auszeichnet.

Das aus der Fördervorrichtung 30 im Schüttgutabgabebereich 42 austretende Erntegut wird an eine Förderschnecke 76 übergeben, welche das Erntegut in den Korntank 32 überführt.

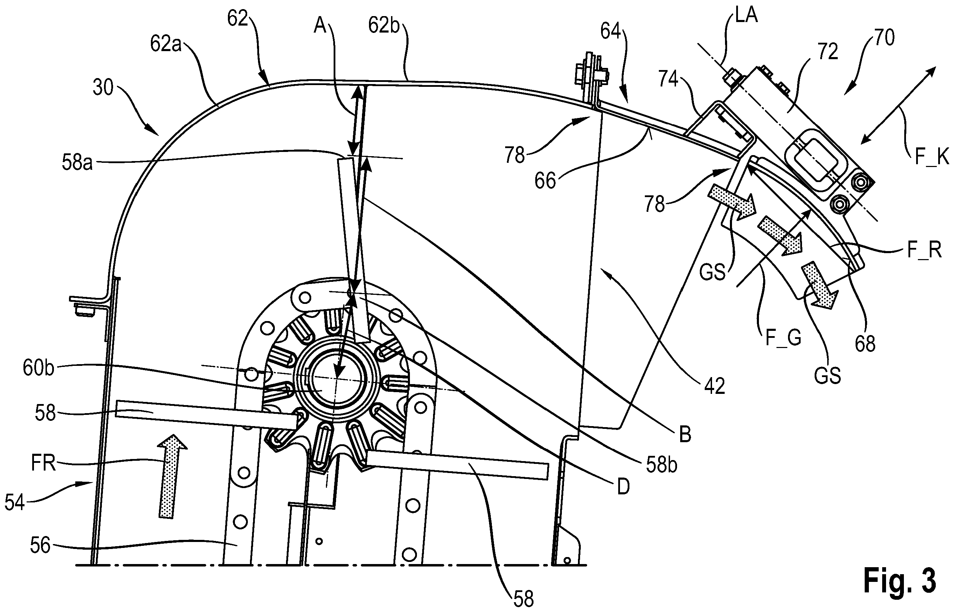

Die Darstellung in Fig. 3 zeigt den Kopfbereich der Fördervorrichtung 30 gemäß Fig. 2 in einer weiter vereinfachten Darstellung. Auf die Darstellung der unterhalb des oberen Kettenrades 60b liegenden Bauteile der Fördervorrichtung 30 wie auch der im Schüttgutabgabebereich 42 angeordneten Förderschnecke 76 wurde hierzu verzichtet. Die Darstellung zeigt ein Förderelement 58, dessen freies Ende 58a im Zenit des oberen Kettenrades 60b steht. In dieser als Zenit bezeichneten Position des Förderelementes 58 ist der Abstand zwischen dem freien Ende 58a und dem die Fördervorrichtung 30 im Schüttgutabgabebereich 42 abschnittsweise umgebenden Deckelabschnitt 62 am geringsten. Mit dem Erreichen dieser Position des jeweiligen Förderelementes 58 soll sichergestellt sein, dass das auf dem Förderelement 58 befindliche Erntegut nahezu vollständig abgegeben wurde. Hierzu ist der Abstand zwischen dem freien Ende 58a des jeweiligen Förderelements 58 und dem die Fördervorrichtung 30 im Schüttgutabgabebereich 42 umgebenden Deckelabschnitt 62 in der Position des Förderelementes 58, in welcher die Beabstandung zu dem Deckelabschnitt 62 am geringsten ist, derart gewählt, dass das auf dem Förderelement 58 befindliche Schüttgut nahezu vollständig abgebbar und eine gleichmäßige Anströmung der Sensorfläche 68 erreichbar ist. Dazu weisen der Deckelabschnitt 62 und das im Zenit stehende freie Ende 58a des jeweiligen Förderelementes 58 einen Mindestabstand A auf. Der Mindestabstand A ist gleich oder kleiner als ein Abstand B zwischen dem freien Ende 58a des Förderelementes 58 und seinem Anlenkpunkt 58b an der endlos umlaufenden Förderkette 56 der Fördervorrichtung 30. Um den Mindestabstand A konstant halten zu können, ist vorgesehen, dass eine Spannvorrichtung zum Straffen der Förderkette im Fußbereich der Fördervorrichtung 30 angeordnet ist.

Weiterhin ist der Darstellung in Fig. 3 die Anordnung der Messeinrichtung 70 zu entnehmen. Die Messeinrichtung 70 ist durch ein die Kraftmesszelle 72 einschließendes Gehäuse an der Halterung 74 an dem Führungsabschnitt 64 angeordnet. Die Sensorfläche 68 ist nur durch die Kraftmesszelle 72 mit der Fördervorrichtung 30 verbunden. Auf diese Weise können Störeinflüsse durch Hysterese einer eventuellen Lagerung ausgeschlossen werden. Die Übergänge 78 zwischen dem zweiten Abschnitt 62b des Deckelabschnitts 62 und dem Führungsabschnitt 64 sowie dem Führungsabschnitt 64 zur Sensorfläche 68 der Messeinrichtung 70 weisen, wie bereits ausgeführt, einen tangentialen Verlauf auf. Der jeweilige tangentiale Verlauf der Übergange 78 gewährleistet ein tangentiales Einlaufen des Erntegutstromes auf die Sensorfläche 68.

Die Kraftmesszelle 72 ist als eine Plattformwägezelle ausgeführt. Dieser Typ einer Kraftmesszelle 72 misst die auf die Sensorfläche 68 einwirkenden Kräfte unabhängig von einem Hebelarm, der aus dem Abstand zwischen der Anbringung an der Halterung 74 und der Anordnung der Sensorfläche an der Kraftmesszelle 72 resultiert. Das entlang der Sensorfläche 68 strömende Erntegut erzeugt aufgrund seiner Umlenkung eine durch Neigung und Gravitation beeinflusste resultierende Zentrifugalkraft, welche durch einen Kraftvektor F_G veranschaulicht ist. Die Kraftmesszelle 72 ist derart angeordnet, dass die Messrichtung der Messeinrichtung 70 und die auf die Sensorfläche 68 einwirkende resultierende Zentrifugalkraft F_G gleichgerichtet sind. Die Kraftmesszelle 72 nimmt eine durch einen resultierende Kraftvektor F_K veranschaulichte gemessene Kraft auf. Die Orientierung des Kraftvektors F_K stellt zugleich die Messrichtung der Kraftmesszelle 72 dar. Aus der an der Oberfläche der Sensorfläche 68 auftretenden Reibung des vorbeiströmenden Erntegutes resultieren Reibungskräfte, welche durch einen Kraftvektor F_R veranschaulicht werden. Der Verlauf des Kraftvektors F_R der resultierenden Reibungskräfte ist parallel zur Längsachse LA der Kraftmesszelle 72 beziehungsweise senkrecht zur Messrichtung der Kraftmesszelle 72, so dass die resultierenden Reibungskräfte nicht in die Kraftmessung zur Bestimmung des Durchsatzes eingehen. Hierdurch ist eine die Reibungskräfte kompensierende Anordnung der Sensorfläche 68 gegeben. Nachstehend wird ein Verfahren zur Bestimmung des aus gereinigtem Erntegut bestehenden Massenstroms beschrieben, der von der Fördervorrichtung 30 in de Korntank 32 gefördert wird. Wie bereits ausgeführt wurde, wird das von der Fördervorrichtung 30 abgegebene gereinigte Erntegut von der im Schüttgutabgabebereich 42 vorgesehenen Führungsfläche 66 des Führungsabschnittes 64 in Richtung der Sensorfläche 68 der Messeinrichtung 70 umgelenkt. Die Masse des Erntegutstromes wird durch die Messung der auf die Sensorfläche 68 der Messeinrichtung 70 ausgeübten resultierenden Zentrifugalkraft (Kraftvektor F_G) bestimmt, wobei zumindest zwei diese Kraftmessung beeinflussende Parameter kompensiert werden. Zum einen wird aufgrund der besonderen Anordnung der Kraftmesszelle 72 die resultierende Reibungskraft (Kraftvektor F_R), die der Erntegutstrom auf die Sensorfläche 68 aufbringt, kompensiert.

Darüber hinaus ist vorgesehen, dass zumindest ein zweiter die Kraftmessung beeinflussender Parameter kompensiert wird. Als die Kraftmessung beeinflussende Parameter sind unter anderem auf die Fördervorrichtung 30 in im Wesentlichen vertikaler Richtung einwirkende äußere mechanische Kräfte, ein Drehzahlabfall respektive ein Abfall der Fördergeschwindigkeit der Fördervorrichtung 30 sowie eine Neigung der Messeinrichtung 70 anzusehen. Grundsätzlich finden auch die Erntegutart sowie Eigenschaften wie die Feuchte des Erntegutes Berücksichtigung. Je nach Erntegutart beeinflussen Gewicht und Größe der einzelnen Partikel des gereinigten Erntegutes das Strömungsverhalten sowie die auf die Sensorfläche 68 ausgeübte resultierende Zentrifugalkraft F_G. Die Feuchtigkeit des Erntegutes kann die Geschwindigkeit beeinflussen, mit der das Erntegut nach dem Abwurf von dem jeweiligen Förderelement 58 entlang des Führungsabschnittes 64 und der Sensorfläche 68 entlang strömt. Zudem kann durch die Feuchtigkeit das Haftreibungsverhalten des Erntegutes beeinflusst werden.

Um diese Einflüsse bei der Bestimmung des Massenstroms basierend auf der Kraftmessung durch die Messeinrichtung 70 zu berücksichtigen, ist die Steuer- und Regelvorrichtung 52 mit den Sensoren 44, 46, 48 signaltechnisch verbunden. Der jeweilige Sensor 44, 46, 48 stellt ein die jeweilige zu überwachende Messgröße repräsentierendes Signal bereit, welches von der Steuer- und Regelvorrichtung 52 empfangen und ausgewertet und hinsichtlich seines Einflusses auf die mittels der Kraftmesszelle 72 gemessen resultierenden Kraft F_K berücksichtigt wird.

Somit lässt sich mittels des Drehzahlsensors 46 eine temporär auftretende Drückung, das heißt ein Drehzahlabfall, des Antriebsmotors 34 erfassen. Der temporäre Drehzahlabfall des Antriebsmotors 34 hat einen Drehzahlabfall respektive eine Reduzierung der Fördergeschwindigkeit der Fördervorrichtung 30 zur Folge. Der damit einhergehende Geschwindigkeitsabfall des entlang der Sensorfläche 68 strömenden Erntegutstromes, der eine Reduzierung des Durchsatzes bedeutet, wird entsprechend von der Steuer- und Regelvorrichtung 52 verrechnet. Auf diese Weise wird die von dem Erntegutstrom auf die Sensorfläche 68 aufgebrachte resultierende Zentrifugalkraft F_G unter Berücksichtigung des Geschwindigkeitsabfalls bei der Kraftmessung durch die Messeinrichtung 70 zur Bestimmung des Durchsatzes bestimmt.

Ein weiterer Parameter, der die Bestimmung des Massenstroms aufgrund der Kräftemessung durch die Messeinrichtung 70 beeinflusst, ist die Feuchtigkeit des Erntegutes. Der Feuchtigkeitsgehalt des Erntegutes bei der Ernte variiert in Abhängigkeit von dem Erntezeitpunkt und den äußeren Umgebungsbedingungen, wie der Witterung. Mit zunehmendem Feuchtigkeitsgehalt kann das Gesamtgewicht eines Korns ansteigen. Wesentlicher ist der Einfluss auf die Geschwindigkeit, mit der das Erntegut nach dem Abwurf von dem jeweiligen Förderelement 58 strömt sowie die Beeinflussung des Reibungsverhaltens. Entsprechend können sich die von dem vorbeiströmenden Erntegut auf die Sensorfläche 68 ausgeübten resultierenden Kräfte, die resultierende Zentrifugalkraft F_G und die resultierende Reibungskraft, bei gleichbleibendem Durchsatz verändern. Um diesen Einfluss zu kompensieren, wird die Detektionscharakteristik der Messeinrichtung 70 in Abhängigkeit von der Feuchtigkeit des Erntegutes geändert. Zur Bestimmung der Feuchtigkeit des gereinigten Erntegutes kann, wie weiter oben beschrieben, ein Feuchtesensor 44 in dem Mähdrescher 10 angeordnet sein. Bevorzugt ist dieser Feuchtesensor 44 im Bereich des Schüttgutannahmebereichs 40 angeordnet. Alternativ kann zu Beginn des Erntevorganges eine manuelle Bestimmung des Feuchtigkeitsgehaltes des Ernteguts durchgeführt werden. Das Ergebnis dieser manuellen Feuchtigkeitsgehaltsbestimmung kann mittels der Ein- und Ausgabeeinrichtung 80 an die Steuer- und Regelungsvorrichtung 52 übergeben werden, um die Detektionscharakteristik der Messeinrichtung 70 entsprechend anzupassen.

Bei der Erntefahrt des Mähdreschers 10 kann es aufgrund der Beschaffenheit des zu bearbeitenden Bodens zu einer Längs- und/oder Querneigung des Mähdreschers 10 beziehungsweise der Fahrdynamik zu Beschleunigungsänderungen kommen. Die Kraftmesszelle 72 misst die auf die Sensorfläche 68 einwirkende resultierende Zentrifugalkraft F_G jedoch nur dann im vollen Betrag, wenn Sie exakt in Messrichtung der Kraftmesszelle 72 wirkt. Ändert sich die Neigung der Kraftmesszelle 72 respektive die des Mähdreschers 10, so wirkt die Gravitationskraft unter einem geänderten Winkel auf die Sensorfläche 68 und auf den Erntegutstrom ein. Die Änderung der resultierenden Zentrifugalkraft F_G und der von der Kraftmesszelle 72 gemessenen resultierenden Kraft F_K unter dem Einfluss der Neigung des Mähdreschers 10 wird entsprechend verrechnet und dadurch bei der Bestimmung des Durchsatzes bzw. des Ertrages durch die Kraftmessung kompensiert. Diese Kompensation kann intern in der Messeinrichtung 70 erfolgen. Alternativ ist ein Neigungssensor 50 an oder in dem Mähdrescher 10 angeordnet. Die von dem Neigungssensor 50 erfassten, eine Längs- und/oder Querneigung repräsentierenden Signale werden an die Steuer- und Regelungsvorrichtung 52 übertragen und von dieser ausgewertet. Die Steuer- und Regelungsvorrichtung 52 kompensiert mittels dieser Neigungswerte deren Einfluss auf die Durchsatzbestimmung.

Weiterhin beeinflussen auf die Fördervorrichtung 30 in im Wesentlichen vertikaler Richtung einwirkende äußere mechanische Kräfte die Bestimmung des Durchsatzes. Hierbei handelt es sich um Beschleunigungskräfte, welche durch die Fahrt auf dem Feld bzw. die Antriebe 34 des Mähdreschers 10 auftreten. Im letzteren Fall handelt es sich um durch den Antrieb und die Antriebselemente des Mähdreschers auf die Karosserie übertragene Schwingungen, die auch in die Fördervorrichtung 30 eingeleitet werden. Auch diese Kräfte wirken auf die Messeinrichtung 70 in der Weise ein, dass es zu Abweichungen der von der Kraftmesszelle 72 im Zeitpunkt des Auftretens der Beschleunigung gemessenen resultierenden Kräfte F_K kommt. So kann das Durchfahren einer Senke im Boden zu einer schlagartigen Beschleunigung in im Wesentlichen vertikaler Richtung führen, welche die Messung der von dem vorbeiströmenden Erntegut auf die Sensorfläche 68 ausgeübten resultierenden Zentrifugalkraft F_G beeinflusst. Diese durch die Beschleunigung verursachte zusätzliche Kraft wird ebenfalls kompensiert. Dabei kann auch diese Kompensation intern in der Messeinrichtung 70 erfolgen. Alternativ ist ein Beschleunigungssensor 48 an oder in dem Mähdrescher 10 angeordnet. Dessen Signale werden ebenfalls von der Steuer- und Regelungsvorrichtung 52 empfangen und ausgewertet, um den Einfluss der Beschleunigung auf die Kraftmessung kompensieren zu können.

Zwecks der Kompensation dieser Einflussgrößen sind in einer Speichereinheit der Steuer- und Regelungsvorrichtung 52 entsprechende Algorithmen bzw. Detektionscharakteristika, die sich an der Erntegutart oder dem Erntemaschinentyp orientieren können, abrufbar hinterlegt.

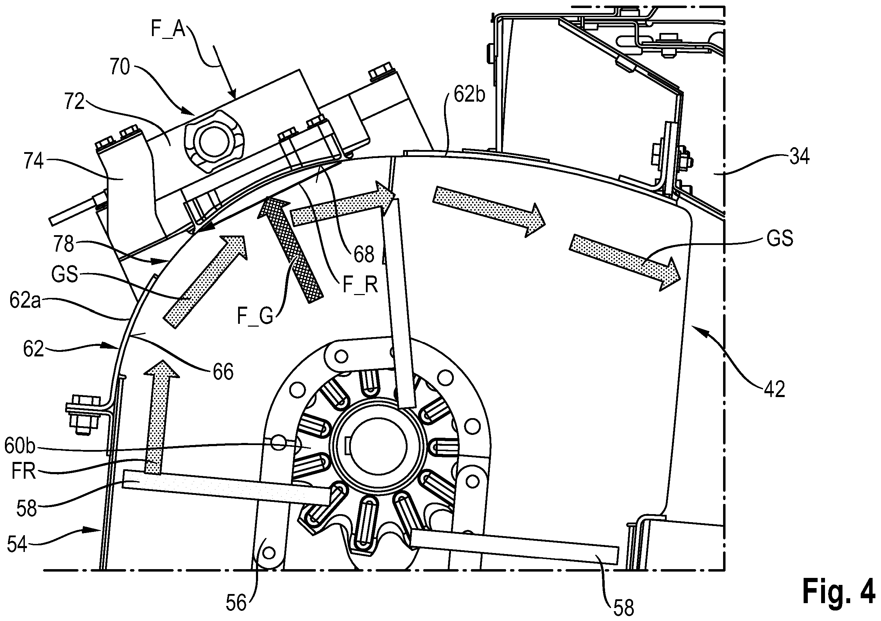

In Fig. 4 ist eine alternative Anordnung der Messeinrichtung 70 dargestellt. Gemäß dieser Ausführungsform befindet sich die Sensorfläche 68 im ersten Abschnitt 62a des Deckelabschnitts 62. Die Führungsfläche 66 ist dabei Teil des ersten Abschnitts 62 des Deckelabschnitts 62. Aufgrund dieser Anordnung im ersten Abschnitt 62a befindet sich die Messeinrichtung 70, das heißt die Kraftmesszelle 72 und die Sensorfläche 68, außerhalb des Korntanks 34. Gemäß dieser Ausführung befindet sich die Führungsfläche 66 im kopfseitigen Einlaufbereich der Fördervorrichtung 30, das heißt vor dem Umlenkpunkt der Förderelemente 58. Vorteilhaft an dieser Anordnung bzw. Positionierung der Sensorfläche 68 ist, dass das Erntegut eine starke Umlenkung aufgrund der stärkeren Krümmung der Sensorfläche 68 erfährt. Somit wirken große Kräfte auf die Sensorfläche 68 ein, so dass auch geringe Erntegutdurchsätze gut messbar sind. Des Weiteren wird wegen des geringen Abstands zwischen dem freien Ende 58a des Förderelementes 58 und der Sensorfläche 68 das Erntegut in diesem Bereich aktiv gefördert. Dies führt zu einem geringeren Reibungseinfluss bei der Messung des Massenstromes. Zudem gewährleistet die aktive Förderung des Erntegutes einen kontinuierlichen Erntegutfluss, der in geringerem Maße dem Einfluss der Gravitation unterliegt.

Diese Anordnung der Messeinrichtung 70 außerhalb des Korntanks 34 erfordert eine Maßnahme, um Erntegutverluste durch Austrag in einem Bereich zwischen dem Deckelabschnitt 62 und der Messeinrichtung 68 zu vermeiden.

Eine mögliche Maßnahme besteht darin, dass eine umlaufende Abdichtung der Sensorfläche 68 gegenüber dem ersten Abschnitt 62a vorgesehen ist, um Erntegutverluste zu vermeiden. Denkbar ist auch die Einhaltung eines so geringen Spaltmaßes zwischen der Sensorfläche 68 und dem ersten Abschnitt 62a, das ein Hindurchtreten von Erntegut verhindert wird. Als alternative Maßnahme kann vorgesehen sein, dass durch den Spalt zwischen der Sensorfläche 68 und dem ersten Abschnitt 62a hindurchtretendes Erntegut von einer Vorrichtung aufgefangen und in die Fördervorrichtung zurückgeführt wird.

Um trotz der umlaufenden Abdichtung die Durchsatzmessung, welche die Sensorfläche 68 mit dem ersten Abschnitt 62a des Deckelabschnittes 62 verbindet, zu gewährleisten, ist das zur Abdichtung verwendete Material elastisch ausgeführt. Das elastische Material der Abdichtung ermöglicht der Sensorfläche 68 eine geringfügige Auslenkung in die Messrichtung der Kraftmesszelle 72, die durch die resultierende Zentrifugalkraft F_G verursacht wird. Die Messung der von dem Erntegutstrom auf die Sensorfläche 68 übertragenen Zentrifugalkraft F_G wird durch die Auslenkung der Sensorfläche 68 in Messrichtung gegenüber dem ersten Abschnitt 62a erfasst. Hierbei ist zu berücksichtigen, dass das zur umlaufenden Abdichtung verwendete Material eine der resultierenden Zentrifugalkraft F_G entgegen gerichtete resultierende Rückstellkraft F_A aufbringt. Diese resultierende Rückstellkraft F_A wird in Kenntnis der materialspezifischen Charakteristika der Abdichtung sowie der geometrischen Gegebenheiten der Anordnung der Kraftmesszelle 72 entsprechend kompensiert. Ein weiterer Aspekt dieser Ausführungsform ist dabei die Herstellung des Deckelabschnittes 62 aus einem Kunststoff.

### Bezugszeichenliste

| | | | |
|---|---|---|---|
| 10 | Mähdrescher | 68 | Sensorfläche |
| 12 | Erntegut | 70 | Messeinrichtung |
| 14 | Arbeitsaggregate | 72 | Kraftmesszelle |
| 16 | Schneidwerk | 74 | Halterung |
| 18 | Schrägförderer | 76 | Förderschnecke |
| 20 | Drescheinrichtung | 78 | Tangentialer Übergang |
| 22 | Umlenktrommel | 80 | Ein- und Ausgabeeinrichtung |
| 24 | Trenneinrichtung | | |
| 26 | Rücklaufboden | A | Mindestabstand |
| 28 | Reinigungsvorrichtung | B | Abstand |
| 30 | Fördervorrichtung | D | Teilkreisdurchmesser von 60b |
| 32 | Korntank | FR | Förderrichtung |
| 34 | Antriebsmaschine | GS | Strömungsverlauf |
| 40 | Schüttgutannahmebereich | | |
| 42 | Schüttgutabgabebereich | F_G | Kraftvektor Zentrifugalkraft |
| 44 | Feuchtesensor | F_R | Kraftvektor Reibungskraft |
| 46 | Drehzahlsensor | F_K | Kraftvektor Beschleunigung |
| 48 | Beschleunigungssensor | F_A | Kraftvektor Rückstellkraft |
| 50 | Neigungssensor | | |
| 52 | Steuer- und Regelvorrichtung | | |
| 54 | Gehäuse | | |
| 56 | Förderkette | | |
| 58 | Förderelemente | | |
| 58a | Freies Ende von 58 | | |
| 60a | Unteres Kettenrad | | |
| 60b | Oberes Kettenrad | | |
| 62 | Deckelabschnitt | | |
| 62a | Erster Abschnitt von 62 | | |
| 62b | Zweiter Abschnitt von 62 | | |
| 64 | Führungsabschnitt | | |
| 66 | Führungsfläche | | |

## Patentansprüche

1. Anordnung einer Messeinrichtung (70) zur Messung eines aus Schüttgut bestehenden Massenstroms, insbesondere Körnerfrüchten, in einer endlos umlaufenden, flächige Förderelemente (58) aufweisenden, abschnittsweise von einem Gehäuse (54) umgebenen Fördervorrichtung (30), welche das Schüttgut von einem tiefer gelegenen Schüttgutannahmebereich (40) zu einem höher gelegenen Schüttgutabgabebereich (42) fördert, wobei dem von dem jeweiligen Förderelement (58) in im Wesentlichen radialer Richtung einer Innenfläche eines Deckelabschnitts (62) des Gehäuses (54) abgegebenen Schüttgut durch eine im Kopfbereich der Fördervorrichtung (30) ausgebildete Führungsfläche (66) ein im Wesentlichen kreisbahnförmiger Bewegungsverlauf aufprägbar und das Schüttgut dadurch in Richtung auf eine Sensorfläche (68) der Messeinrichtung (70) umlenkbar ist, **dadurch gekennzeichnet, dass** die Sensorfläche (68) der Messeinrichtung (70) derart im Kopfbereich der Fördervorrichtung (30) angeordnet ist, dass sich im Übergang (78) von der Führungsfläche (66) auf die Sensorfläche (68) ein in Umfangsrichtung tangentialer Verlauf einstellt, so dass die Sensorfläche (68) den Bewegungsverlauf des Massenstroms tangiert, dass die Führungsfläche (66) Teil eines separaten Führungsabschnittes (64) ist, welcher sich im Schüttgutabgabebereich (42) im Wesentlichen absatzfrei an den Deckelabschnitt (62) anschließt, so dass sich ein tangentialer Übergang einstellt, und dass ein Abstand zwischen dem freien Ende (58a) des jeweiligen Förderelements (58) und einem die Fördervorrichtung (30) im Schüttgutabgabebereich (42) umgebenden Deckelabschnitt (62) in einer Position des Förderelementes (58), in welcher die Beabstandung zu dem Deckelabschnitt (62) am geringsten ist, derart gewählt ist, dass das auf dem Förderelement (58) befindliche Schüttgut nahezu vollständig abgebbar und eine gleichmäßige Anströmung der Sensorfläche (68) erreichbar ist.

2. Anordnung nach Anspruch 1, **dadurch gekennzeichnet, dass** die Führungsfläche (66) Teil des Deckelabschnittes (62) ist.

3. Anordnung nach einem der Ansprüche 1 oder 2, **dadurch gekennzeichnet, dass** die Messeinrichtung (70) an einer der Führungsfläche (66) abgewandten Seite angeordneten Halterung (74) angebracht ist.

4. Anordnung nach einem der Ansprüche 1 bis 3, **dadurch gekennzeichnet, dass** ein Mindestabstand (A) zwischen dem freien Ende (58a) des jeweiligen Förderelements (58) und einem die Fördervorrichtung (30) im Schüttgutabgabebereich (42) umgebenden Deckelabschnitt (62) in einer Position des Förderelementes (58), in welcher die Beabstandung zu dem Deckelabschnitt (62) am geringsten ist, gleich oder kleiner ist, als ein Abstand (B) zwischen dem freien Ende (58a) des Förderelementes (58) und seinem Anlenkpunkt (58b) an einem endlos umlaufenden Antriebsmittel (56) der Fördervorrichtung (30).

5. Anordnung nach einem der Anspruch 4, **dadurch gekennzeichnet, dass** der Mindestabstand (A) zwischen dem freien Ende (58a) des Förderelementes (58) und dem Deckelabschnitt (62) im Schüttgutabgabebereich (42) konstant ist.

6. Anordnung nach einem der Ansprüche 1 bis 5, **dadurch gekennzeichnet, dass** die Messeinrichtung (70) eine Kraftmesszelle (72) umfasst, mittels der die Sensorfläche (68) an der Fördervorrichtung (30) angeordnet ist.

7. Anordnung nach Anspruch 6, **dadurch gekennzeichnet, dass** die Kraftmesszelle (72) als eine Plattformwägezelle ausgebildet ist.

8. Anordnung nach einem der vorangehenden Ansprüche, **dadurch gekennzeichnet, dass** die Sensorfläche (68) derart zum Strömungsverlauf (GS) des Massenstrom des Schüttgutes ausgerichtet ist, dass eine aus den an der Oberfläche der Sensorfläche (68) auftretenden Reibkräften resultierende Reibungskraft (F_R) parallel zur Längsachse der Kraftmesszelle (72) wirkt.

9. Anordnung nach einem der Ansprüche 1 bis 8, **dadurch gekennzeichnet, dass** der Deckelabschnitt (62) mehrteilig ausgebildet ist.

10. Mähdrescher (10), mit einer endlos umlaufenden, flächige Förderelemente (58) aufweisenden, abschnittsweise von einem Gehäuse (54) umgebenen Fördervorrichtung (30), welche Schüttgut von einem tiefer gelegenen Schüttgutannahmebereich (40) zu einem höher gelegenen Schüttgutabgabebereich (42) fördert, wobei in dem von dem jeweiligen Förderelement (58) in im Wesentlichen vertikaler Richtung abgegebenen Schüttgut durch eine im Schüttgutabgabebereich (42) angeordnete Führungsfläche (66) ein im Wesentlichen kreisbahnförmiger Bewegungsverlauf aufprägbar ist und das Schüttgut dadurch in Richtung auf eine Sensorfläche (68) einer Messeinrichtung (70) zur Messung eines aus Schüttgut bestehenden Massenstroms, insbesondere Körnerfrüchten, umlenkbar ist, **gekennzeichnet durch** eine Anordnung der Messeinrichtung (70) gemäß einem der Patentansprüche 1 bis 9.

11. Mähdrescher (10) nach Anspruch 10, **dadurch gekennzeichnet, dass** die als Kettenförderer ausgebildete Fördervorrichtung (30) eine Spannvorrichtung aufweist, welche im Schüttgutannahmebereich (40) angeordnet ist.

## Claims

1. A measuring device assembly (70) for measuring a mass flow consisting of bulk material, in particular cereal, in a continuously circulating conveyor device (30) having laminar conveying elements (58) and with sections surrounded by a housing (54), which conveys the bulk material from a lower level bulk material receiving zone (40) to a higher level bulk material delivery zone (42), wherein a substantially circular path of movement can be imposed on the bulk material delivered by the respective laminar conveying element (58) in a substantially radial direction of an inner surface of a cover section (62) of the housing (54) by means of a guide surface (66) formed in the upper zone of the conveyor device (30) and the bulk material can therefore be deflected in a direction which is onto a sensor surface (68) of the measuring device (70), **characterized in that** the sensor surface (68) of the measuring device (70) is disposed in the upper zone of the conveyor device (30) in a manner such that a tangential path is set up in the circumferential direction in the transition (78) from the guide surface (66) to the sensor surface (68) so that the sensor surface (68) is tangential to the path of movement of the mass flow, **in that** the guide surface (66) is part of a separate guide section (64) which in the bulk material delivery zone (42) is substantially contiguous with the cover section (62) and free from offsets so that a tangential transition is formed, and **in that** a clearance between the free end (58a) of the respective conveying element (58) and a cover section (62) which surrounds the conveyor device (30) in the bulk material delivery zone (42) in a position of the conveying element (58) in which the clearance of the cover section (62) is at its smallest is selected in a manner such that almost the entirety of the bulk material on the conveying element (58) can be delivered and a uniform flow onto the sensor surface (68) can be obtained.

2. The assembly according to claim 1, **characterized in that** the guide surface (66) is part of the cover section (62).

3. The assembly according to claim 1 or claim 2, **characterized in that** the measuring device (70) is attached to a mount (74) disposed on a side facing away from the guide surface (66).

4. The assembly according to one of claims 1 to 3, **characterized in that** a minimum clearance (A) between the free end (58a) of the respective conveying element (58) and a cover section (62) surrounding the conveyor device (30) in the bulk material delivery zone (42) in a position of the conveying element (58) in which the clearance to the cover section (62) is the smallest is the same as or smaller than a clearance (B) between the free end (58a) of the conveying element (58) and its pivot point (58b) on a continuously circulating drive means (56) of the conveyor device (30).

5. The assembly according to claim 4, **characterized in that** the minimum clearance (A) between the free end (58a) of the conveying element (58) and the cover section (62) in the bulk material delivery zone (42) is constant.

6. The assembly according to one of claims 1 to 5, **characterized in that** the measuring device (70) comprises a load cell (72) by means of which the sensor surface (68) is disposed on the conveyor device (30).

7. The assembly according to claim 6, **characterized in that** the load cell (72) is configured as a platform weighing cell.

8. The assembly according to one of the preceding claims, **characterized in that** the sensor surface (68) is orientated with respect to the path of flow (GS) of the mass flow of the bulk material in a manner such that a frictional force (F_R) which is a resultant of the frictional forces arising at the surface of the sensor surface (68) acts parallel to the longitudinal axis of the load cell (72).

9. The assembly according to one of claims 1 to 8, **characterized in that** the cover section (62) is formed in multiple parts.

10. A combine harvester (10), having a continuously circulating conveyor device (30) having laminar conveying elements (58) with sections surrounded by a housing (54), which conveys bulk material from a lower level bulk material receiving zone (40) to a higher level bulk material delivery zone (42) wherein, a substantially circular path of movement can be imposed on the bulk material delivered in a vertical direction by the respective conveying element (58) by means of a guide surface (66) disposed in the bulk material delivery zone (42), and the bulk material can thereby be deflected in a direction onto a sensor surface (68) of a measuring device (70) in order to measure a mass flow consisting of bulk material, in particular cereal, **characterized by** an assembly for the measuring device (70) in accordance with one of patent claims 1 to 9.

11. The combine harvester (10) according to claim 10, **characterized in that** the conveyor device (30) configured as a chain conveyor has a tensioning device which is disposed in the bulk material receiving zone (40).

## Revendications

1. Agencement d'un équipement de mesure (70) pour mesurer un flux massique constitué de produit en vrac, en particulier de grains, dans un dispositif de convoyage (30) qui défile en continu, comporte des éléments de convoyage à plat (58) et est entouré par endroits par un carter (54) et qui convoie le produit en vrac depuis une zone de réception de produit en vrac (40) située plus bas jusqu'à une zone de restitution de produit en vrac (42) située plus haut, au produit en vrac restitué par l'élément de convoyage respectif (58) dans une direction sensiblement radiale d'une surface intérieure d'une portion de couvercle (62) du carter (54) pouvant être imprimée une trajectoire sensiblement arquée par l'intermédiaire d'une surface de guidage (66) ménagée dans la zone de tête du dispositif de convoyage (30) et le produit en vrac pouvant ainsi être dévié en direction d'une surface de capteur (68) de l'équipement de mesure (70), **caractérisé en ce que** la surface de capteur (68) de l'équipement de mesure (70) est disposée dans la zone de tête du dispositif de convoyage (30) de façon que, dans la transition (78) de la surface de guidage (66) à la surface de capteur (68) s'établisse un trajet tangentiel dans la direction circonférentielle, de façon que la surface de capteur (68) soit tangente à la trajectoire du flux massique, **en ce que** la surface de guidage (66) fait partie d'une portion de guidage séparée (64) qui se raccorde sensiblement sans décrochement à la portion de couvercle (62) dans la zone de restitution de produit en vrac (42), de sorte que s'établit une transition tangentielle, et **en ce qu'**une distance entre l'extrémité libre (58a) de l'élément de convoyage respectif (58) et une portion de couvercle (62) entourant le dispositif de convoyage (30) dans la zone de restitution de produit en vrac (42) dans une position de l'élément de convoyage (58) où l'écartement par rapport à la portion de couvercle (62) est le plus réduit est choisie de façon que le produit en vrac se trouvant sur l'élément de convoyage (58) puisse être restitué presque en totalité et qu'un écoulement uniforme devant la surface de capteur (68) puisse être atteint.

2. Agencement selon la revendication 1, **caractérisé en ce que** la surface de guidage (66) fait partie de la portion de couvercle (62).

3. Agencement selon une des revendications 1 ou 2, **caractérisé en ce que** l'équipement de mesure (70) est disposé sur un support (74) disposé sur un côté situé à l'opposé de la surface de guidage (66) .

4. Agencement selon une des revendications 1 à 3, **caractérisé en ce qu'**une distance minimale (A) entre l'extrémité libre (58a) de l'élément de convoyage respectif (58) et une portion de couvercle (62) entourant le dispositif de convoyage (30) dans la zone de restitution de produit en vrac (42) dans une position de l'élément de convoyage (58) où l'écartement par rapport à la portion de couvercle (62) est le plus réduit est égale ou inférieure à une distance (B) entre l'extrémité libre (58a) de l'élément de convoyage (58) et son point d'articulation (58b) sur un moyen d'entraînement à défilement continu (56) du dispositif de convoyage (30).

5. Agencement selon une des revendications 4, **caractérisé en ce que** la distance minimale (A) entre l'extrémité libre (58a) de l'élément de convoyage (58) et la portion de couvercle (62) dans la zone de restitution de produit en vrac (42) est constante.

6. Agencement selon une des revendications 1 à 5, **caractérisé en ce que** l'équipement de mesure (70) est une cellule dynamométrique (72) au moyen de laquelle la surface de capteur (68) est disposée sur le dispositif de convoyage (30).

7. Agencement selon la revendication 6, **caractérisé en ce que** la cellule dynamométrique (72) est une cellule de charge à plate-forme.

8. Agencement selon une des revendications précédentes, **caractérisé en ce que** la surface de capteur (68) est orientée vers le trajet d'écoulement (GS) du flux massique du produit en vrac, de façon qu'une force de frottement (F_R) résultant des forces de frottement survenant à la surface supérieure de la surface de capteur (68) agisse parallèlement à l'axe longitudinal de la cellule dynamométrique (72).

9. Agencement selon une des revendications 1 à 8, **caractérisé en ce que** la portion de couvercle (62) est conçue en plusieurs parties.

10. Moissonneuse-batteuse (10) comprenant un dispositif de convoyage (30) qui défile en continu, comporte des éléments de convoyage à plat (58) et est entouré par endroits par un carter (54) et qui convoie du produit en vrac depuis une zone de réception de produit en vrac (40) située plus bas jusqu'à une zone de restitution de produit en vrac (42) située plus haut, dans le produit en vrac restitué par l'élément de convoyage respectif (58) dans une direction sensiblement verticale pouvant être imprimée une trajectoire sensiblement arquée par l'intermédiaire d'une surface de guidage (66) ménagée dans la zone de restitution de produit en vrac (42) et le produit en vrac pouvant ainsi être dévié en direction d'une surface de capteur (68) d'un équipement de mesure (70) pour mesurer un flux massique constitué de produit en vrac, en particulier de grains, **caractérisée par** un agencement de l'équipement de mesure (70) selon une des revendications 1 à 9.

11. Moissonneuse-batteuse (10) selon la revendication 10, **caractérisée en ce que** le dispositif de convoyage (30) conformé en convoyeur à chaîne comporte un dispositif de tension qui est disposé dans la zone de réception de produit en vrac (40).
